# EUROPÄISCHE PATENTSCHRIFT

(11) **EP 0 764 193 B1**
(45) Veröffentlichungstag und Bekanntmachung des Hinweises auf die Patenterteilung: **05.12.2001**
(21) Anmeldenummer: 96909136.2
(22) Anmeldetag: 28.03.1996
(51) Int. Cl.: C09K 3/10, C09K 21/06

(54) **VERFAHREN ZUR ZEITWEILIGEN VERSIEGELUNG ODER VERFESTIGUNG VON MATERIALIEN**
METHOD OF TEMPORARILY SEALING OR CONSOLIDATING MATERIALS
PROCEDE DE SCELLEMENT OU DE CONSOLIDATION TEMPORAIRE DE MATERIAUX

(30) Priorität: 28.03.1995 DE 19511340
(43) Veröffentlichungstag der Anmeldung: 26.03.1997
(73) Patentinhaber: Hangleiter, Hans Michael, 64853 Otzberg 1 (DE); Jägers, Elisabeth, 53332 Bornheim (DE); Jägers, Erhard, 53332 Bornheim (DE)
(72) Erfinder: Hangleiter, Hans Michael, 64853 Otzberg 1 (DE); Jägers, Elisabeth, 53332 Bornheim (DE); Jägers, Erhard, 53332 Bornheim (DE)
(74) Vertreter: Weber-Bruls, Dorothée, Dr.
(86) Internationale Anmeldenummer: EP9601350
(87) Internationale Veröffentlichungsnummer: WO9630457

(56) Entgegenhaltungen:
- EP-A- 0 149 912
- DE-A- 3 511 924
- JP-A- 54 147 144
- US-A- 4 348 306
- DATABASE WPI Week 7845 Derwent Publications Ltd., London, GB; AN 78-81449A XP002009039 & JP,A,53 038 186 (DAINIPPON) , 13.Oktober 1978

## Beschreibung

Die Erfindung betrifft die Verwendung eines Schutzstoffes mit verfestigender und/oder versiegelnder Wirkung zur zeitweiligen Versiegelung oder Verfestigung von Materialien, wobei metallische Materialien ausgeschlossen sind.

Das Problem, bestimmte Teile eines Werkstückes temporär zum Beispiel für einen folgenden Arbeitsvorgang abzudecken oder vorübergehend zu schützen oder empfindliche oder zerfallende Materialien für eine vorübergehende Zeit zu verfestigen, ist weit verbreitet. Das Problem wurde bisher im ersten Fall durch Aufbringen eines Decklackes oder im zweiten Fall durch Einsatz von natürlichen oder synthetischen Klebe- oder Festigungsmitteln gelöst. Alle diese bekannten benutzten Schutzstoffe haben aber den Nachteil, daß sie nach der Bearbeitung oder, wenn eine Festigung nicht mehr erwünscht ist, durch spezielle Lösemittel oder durch mechanische Behandlung wieder entfernt werden müssen. Dies bedeutet nicht nur einen weiteren Arbeitsgang, sondern auch eine starke Beanspruchung für das Werkstück oder die Materialien.

So wird nach der in der europäischen Patentanmeldung 149 912 empfohlenen Versiegelung von Microrissen eines Katalysatorträgers eine geschmolzene organische Verbindung verfestigt. Da diese Verbindung bei Raumtemperatur jedoch einen niedrigen Dampfdruck besitzt, muß sie bei hoher Temperatur durch Ausbrennen von dem Katalysatorträger wieder entfernt werden. Es gibt viele Materialien, bei denen ein derartiges Ausbrennen zur Zerstörung wesentlicher Teile führen würde.

Aus der JP 54147144 A ist ein sublimierbares Rostschutzmittel bekannt. Zu diesem Zweck ist ein Rostschutzmittel zu einem sublimierbaren Kohlenwasserstoff zugefügt und der sublimierbare Kohlenwasserstoff aus Adamantan, endo-Trimethylennorboman und Cyclododecan ausgewählt. Das Rostschutzmittel stammt dabei aus einer Gruppe von gut bekannten Rostschutzmitteln, bestehend aus Diisopropylamin, Dicyclohexylamin, Propargylalkohol, usw.

Der Erfindung liegt die Aufgabe zugrunde, die Verwendung eines Schutzstoffes mit verfestigender und/oder versiegelnder Wirkung zur zeitweiligen Versiegelung oder Verfestigung von Materialien zu ermöglichen, wobei metallische Materialien ausgeschlossen sind.

Erfindungsgemäß gelöst wird die Aufgabe dadurch, daß der Schutzstoff ausgewählt ist aus einer Gruppe von Materialien, die bei Raumtemperatur oder wenig erhöhter Temperatur leicht flüchtig sind und aus Camphen, Campher, Cyclododecan, Naphthalin, Methylnaphthalin, Neopentylalkohol, Tricyclen, Menthol, Thymol oder Diphenyläther oder einer Mischung davon besteht.

Weitere erfindungsgemäße Verwendungen des Schutzstoffes ergeben sich aus den Ansprüchen 2 bis 12.

Der Erfindung liegt somit die überraschende Erkenntnis zugrunde, daß durch Verwendung eines oben beschriebenen Schutzstoffes Materialien zeitweilig versiegelt oder verfestigt werden können, und insbesondere eine Beseitigung des Schutzstoffes von dem Material besonders schonend erfolgen kann, da keine zusätzlichen Reinigungsmittel jeglicher Art verwendet werden müssen, um den Schutzstoff von den Materialien zu entfernen. Dies erfolgt vielmehr durch ein einfaches Verdampfen des aufgetragenen Schutzstoffes von dem Material.

Zum Zwecke der vorliegenden Erfindung wird der Grad der Flüchtigkeit durch den Verlust an Schichtdicke des aufgetragenen Schutzstoffes innerhalb von 24 h bei einer Temperatur von 18 - 20°C definiert. Dabei wird von einer einseitigen Verdampfung der Schicht ausgegangen. Bei der Verwendung von Camphen als Schutzstoff nimmt eine vorgegebene Schichtstärke um ca. 4,72 mm innerhalb 24 h bei den angegebenen Temperaturen ab. Bei der Verwendung von Cyclododecan wird eine Schicht um etwa 0,031 mm innerhalb von 24 h bei den angegebenen Temperaturen dünner.

Anwendungsgebiete für die Erfindung ergeben sich beispielsweise auf folgenden Gebieten:

### 1. Restaurierung und Konservierung von Kunstwerken verschiedener Art

Wandmalereien können vorübergehend hydrophobiert werden, um die Oberflächen mit wässrigen Lösungen behandeln zu können.

Wertvolle Oberflächen beliebiger Objekte können zum vorübergehenden Schutz vor Verschmutzung oder anderen agressiven Einwirkungen versiegelt werden.

Archäologische Funde können sicher geborgen, beziehungsweise zum Zwecke des Transports in eine Werkstatt oder ein Labor zwischengefestigt werden, ohne daß es bei der folgenden Restaurierung zu Komplikationen mit den temporär vorhandenen Schutzstoffen kommt oder diese unter Einsatz von Lösungsmitteln wieder enfernt werden müssen.

Ferner können die Schutzstoffe als Trennmittel in Gußformen; als Stützmörtel oder für Oberflächenkaschierungen oder dergleichen eingesetzt werden.

### Beispiel 1:

### Transportsicherung von empfindlichen Gegenständen

Empfindliche Materialien, wie zum Beispiel archäologische Fundstücke, Gemälde, polychrome Holzskulpturen etc. können noch an der Fundstelle mit einer Schmelze oder einer Lösung aus den genannten Schutzstoffen gefestigt werden.

### 1.1.

Ein bemaltes Putzmörtelstück als Grabungsfund soll zusammen mit der umgebenden Erdschicht geborgen werden. Dazu wird der betreffende Bereich mit Hilfe von Infrarotlampen auf etwa 40°C erwärmt und daraufhin mit einer Tricyclenschmelze begossen. Die Schmelze dringt aufgrund ihrer geringen Viskosität sehr gut ein und erstarrt nach dem Erkalten zu einer wachsartigen Masse. Mit dem Erstarren des Tricyclens ist das von der Schmelze durchdrungene Stück derart gefestigt, daß es gefahrlos von der Fundstelle entfernt werden kann. Soll die Verdunstung des Schutzstoffes nicht unmittelbar nach der Bergung, sondern erst zu einem späteren Zeitpunkt beginnen, läßt sich durch eine nachfolgende luftdichte Verpackung in Polyethylenfolie das Fundstück beliebig lange transportieren oder lagern. Nach Öffnen der Verpackung verdunstet der Schutzstoff rückstandslos und ergibt das unberührte Fundstück frei. Der Verdunstungsvorgang kann gegebenfalls mit Wärme beschleunigt werden.

### 1.2.

In Fällen, in denen eine Wärmebehandlung des zu festigenden Bereichs nicht erwünscht ist, kann auch mit einer Lösung des Schutzstoffes gearbeitet werden. Dazu wird eine gesättigte Lösung von Tricyclen-Camphengemisch in Pentan oder Dichlormethan, insbesondere eine Lösung von 90 Gew% Tricyclen-Camphengemisch mit 10 Gew% des Lösungsmittels hergestellt und mit dem Pinsel auf die betreffenden Flächen aufgetragen (soweit wie möglich auch gegossen). Danach sollte eine Verdunstungszeit des Lösungsmittels bis zu 10h eingehalten werden. Danach sollte die Oberfläche noch einmal nachbehandelt werden. Nach einer weiteren ca. 1-stündigen Trockenzeit ist eine erhebliche Zunahme der Festigkeit erreicht, so daß das Fundstück geborgen werden kann.

### 1.3.

Die Probeentnahme zur Durchführung von naturwissenschaftlichen Untersuchungen wird besonders bei empfindlichen Materialien dadurch erleichtert, daß ein Zerbröckeln der Probe (Bohrkern) durch die vorhergehende Tränkung verhindert wird.

Ein stark versalzener, schwach gebundener Putzmörtel soll als Bohrkern mit 50mm Durchmesser entnommen werden. Auch dazu wird die für die Probenentnahme ausgewählte Stelle eines bemalten Putzmörtels, wie oben beschrieben, mit der Schmelze eingelassen. Nach dem Erkalten kann ein Bohrkern gezogen werden, ohne daß ein Zerbrechen befürchtet werden muß, oder es wird wie in Beispiel 1.2 verfahren.

### 1.4.

Empfindliche, stark gefährdete Malschichten an Kunstgegenständen können für den Transport in eine Werkstatt mit Vlies oder Gewebe kaschiert werden.

Die Transportsicherung von stark gefährdeten Malschichten an Gemälden oder polychromen Skulpturen wird heute häufig mit Hilfe von Japanpapier und einem (leicht reversiblen) Klebemittel durchgeführt. Eine derartige Sicherung kann folgendermaßen mit Cyclododecan ausgeführt werden:

Die Schmelze wird mit einer Heißspritzpistole (Sata) bei einer Temperatur von ca. 65°C aufgespritzt. Für eine zusätzliche Sicherung kann als zweite Lage ein grobmaschiges Gewebe aufgeschmolzen werden. Die Vorgehensweise ist dieselbe wie vorstehend erwähnt. Dabei ist mit einer Haltbarkeit der Sicherung von ca. 30 Tagen pro Milimeter Schichtstärke an Cyclododecan zu rechnen.

### 1.5.

Eine kurzfristige Kaschierung kann mit einer Lösung von Tricyclen in 2-Methylbutan ohne die Anwendung von Wärme hergestellt werden. Dazu wird eine gesättige Lösung von Tricyclen in 2-Methylbutan hergestellt und mit dem Pinsel auf die betreffenden Flächen aufgetragen. Nach ca. zwei Minuten Trockenzeit wird dünnes Japanpapier aufgelegt und mit derselben Lösung eingestrichen. Bei dem hier verwendeten Material ist mit einer sehr schnellen Verdunstung zu rechnen (ca. 0,2mm Schichtstärke pro Stunde).

### Beispiel 2:

### Vorübergehende Verfestigung für die Ausführung von mechanischen Eingriffen, mechanisches Reinigungsverfahren

An schwach gebundenen oder leicht zerbrechlichen Malschichten können Übermalungen oder aufliegende Verschmutzungen mechanisch abgenommen werden, indem diese Schichten mit einer Tränkung einer Schutzstoffschmelze vorübergehend stabilisiert werden.

Eine harte Sinterschicht auf schwach gebundenem Kalkmörtel soll mit Hilfe eines Pulverstrahlverfahrens ausgedünnt werden. In diesem Fall soll der schwachgebundene Kalkmörtel vorübergehend verfestigt werden, um während der Reinigung ein Durchbrechen der Mörteloberfläche zu verhindern. Da in diesem Fall eine über mehrere Stunden anhaltende Festigkeit im Schichtstärkenbereich 0,01mm erwartet werden muß, wird Cyclododecan als Festigungsmittel gewählt. Dabei kann wieder folgendermaßen vorgegangen werden:

Die Cyclododecan-Schmelze wird mit einer Heißspritzpistole (Sata) bei einer Temperatur von ca. 65°C aufgespritzt. Dabei bildet sich ein Belag aus Cyclododecan, der in einem zweiten Arbeitsgang mit Infrarotlampe oder Heizspachtel aufgeschmolzen wird. Dabei wird darauf geachtet, daß das Material vollständig vom Untergrund aufgenommen wird. Notfalls werden Rückstände auf der Oberfläche mit Siedegrenzbenzin abgenommen. Dazu kommen Ultraschallreinigungen in Frage. Ein besonderes Problem stellen harte Sinterkrusten an Wandmalereien dar, die bereits zu Deformierungen und Ablösungen geführt haben. In derartigen Fällen kann die Cyclododecan-schmelze mit dem Pinsel direkt auf den vorgewärmten Untergrund gestrichen oder getropft werden.

### Beispiel 3:

### Abdeckungen als Versiegelung empfindlicher Oberflächen, Trennschicht bei Abformungen

Um poröse Oberflächen bei Abformungen mit Siliconkautschuk oder Latex zu schützen, können diese mit einer Trennschicht aus Cyclododecan beschichtet werden.

Eine Sandsteinplastik mit angewitterter Oberfläche soll mit Siliconkautschuk abgeformt werden. Dabei kann eine Lösung von Cyclododecan in 2-Methylbutan (s.o.) als Zwischenlage verwendet werden. Die gesättigte Lösung wird mit dem Pinsel aufgetragen. Vor der Abformung sollte das Lösungsmittel verdunstet sein.

### Beispiel 4:

### Hydrophobierungen und Versiegelungen von porösen Untergründen während der Durchführung von chemischen Reinigungsverfahren

Flüchtige Hydrophobierungsmittel dienen vor allem dem vorübergehenden Versiegeln von porösen Untergründen, wie Naturstein oder Mörtel. Vor allem bei Reinigungsmaßnahmen an den Oberflächen von Wandmalereien, die mit wässrigen Lösungen durchgeführt werden, soll mit Hilfe der Versiegelung der Eintrag von Schadstoffen in das Porengefüge verhindert werden.

Da auch in diesem Fall eine über mehrere Stunden anhaltende Festigkeit im Schichtstärkebereich von ca. 0,01mm erwartet werden muß, wird Cyclododecan als Festigungsmittel gewählt. Dabei kann wieder folgendermaßen vorgegangen werden:

Eine gesättigte Lösung von Cyclododecan in 2-Methylbutan wird hergestellt und mit dem Pinsel auf die betreffenden Flächen aufgetragen. Nach einer Trocknungszeit von ca. 1 Stunde werden alle Überschüsse mit dem Lösungsmittel von der Oberfläche abgenommen. Danach können Kompressenbehandlungen mit wässrigen Lösungen durchgeführt werden, ohne daß während der Arbeiten Wasser ins Porengefüge eindringt.

### Beispiel 5:

### Einsatz als flüchtiges Bindemittel, Abdichtungen an Rissen ohne Zuschläge

Im Bereich der Konservierung von Wandmalereien oder Steinskulpturen ist der Einsatz von Injektionsmörtel von großer Bedeutung. Um zu verhindern, daß Originale historischer Oberflächen durch diese Injektionsmörtel und -klebemittel verschmutzt werden, müssen Abdichtungen an Rissen und Bruchkanten angebracht werden. Für diese Abdichtungen eignen sich die wachsartigen Schutzstoffe besonders gut. Tricyclen oder Cyclododecan wird hier als Schmelze mit dem Pinsel auf die Risse gestrichen. In einigen Fällen hat es sich als günstig erwiesen, das Cyclododecan mit 50% Siedegrenzbenzin zu verdünnen. In Fällen von Mauerwerkssanierung durch Verpressen mit Injektionsmörteln hat sich eine flächige Beschichtung mit Cyclododecan bewährt. Diese Beschichtung schützt die Oberflächen vor austretender Suspension. In diesem Fall wird Cyclododecan als Schmelze mit einer beheizten Airless-Anlage aufgetragen. Verschmutzungen können entweder direkt abgewaschen werden, oder fallen nach dem Verdunsten des Schutzüberzugs von selbst ab.

### Beispiel 6:

### Bindemittel für Stützmörtel

Mit Hilfe flüchtiger Bindemittel lassen sich alle Arten von Stützmörteln für Sicherungsarbeiten herstellen. Es eignen sich alle Arten von Zuschlägen. Auch fasrige Zuschläge lassen sich verarbeiten, wenn die Schmelze mit Zusätzen von hochdisperser Kieselsäure (Aerosil) entsprechend verdickt wird. Beispiele für Zuschläge sind: Nylonfasern, Glasfasern, Sand, Hohlglaskügelchen etc. Die Vorgehensweise ist folgende:

In eine Schmelze von Tricyclen wird zur Verdünnung ca. 10% Dichlormethan eingebracht und soviel Aerosil zugesetzt, bis eine kleisterartige Konsistenz erreicht ist. Daraufhin wird soviel des Zuschlags zugefügt, bis eine mörtelartige Konsistenz erreicht ist. Dieses Material kann dann als Stützmörtel für gefährdete Putzmörtelschichten angetragen werden. Nach einer entsprechenden Verdunstungszeit (ca. 5mm Schichtdickenverlust innerhalb von 24h) hat sich die Bindung des Stützmörtels wieder aufgelöst.

### 2. Anwendung im Baugewerbe als "flüssige Abdeckfolie"

Vor allem bei Umbaumaßnahmen können wertvolle Oberflächen, die die Maßnahmen unbeschadet überstehen sollen, abgedeckt und damit vor Wasser und Schmutz aller Art geschützt werden.
Naturstein, Holz, Glas, oder andere Materialoberflächen, die bei Putz- oder Anstricharbeiten geschützt werden müssen, können vorübergehend versiegelt werden. Dies ist vor allem in Bereichen vorteilhaft, die nicht auf die übliche Weise mit Folie abgeklebt werden können.

### Beispiel 1:

Cyclododecan wird als Schmelze bei einer Temperatur von 80°C aufgesprüht.
· Cyclododecan wird im Wasserbad (oder einem heizbaren Gefäß mit Temperaturregler) auf ca 90°C erhitzt.
   Cyclododecan wird in den heizbaren Becher einer Sata Heißspritzpistole (oder einer heizbaren Airlessanlage der Fa. Wilhelm Wagner) eingefüllt und mit dieser bei einer Temperatur von ca 90°C mit Druckluft bei 2 bar auf die Oberfläche des betreffenden Objekts aufgespritzt.
· Der Abstand zwischen Düse und Objektoberfläche sollte ca 10cm betragen.

### Beispiel 2:

Cyclodecan wird als wässrige Dispersion aufgetragen. Die Dispersion kann mit dem Pinsel, dem Farbroller oder der Spritzpistole aufgetragen werden.
· Die betreffende Fläche wird mit der Dispersion beschichtet. Nach der Filmbildung ist ein wirksamer Schutz gegen Verschmutzungen in wässriger Phase vorhanden. Die Verschmutzungen sollten allerdings noch vor dem Verdunsten des Schutzstoffes abgenommen werden.
· Die Abnahme kann sowohl durch ein trockenes Abbürsten, als auch durch Abwaschen mit Wasser durchgeführt werden.

### 3. Anwendung im Baugewerbe als Schalungstrennmittel

Bei der Herstellung von Sichtbetonflächen, die später mit einem Anstrich versehen werden sollen, ist ein rückstandsloses Entfernen von Schalungstrennmitteln notwendig. Die Verwendung von Cyclododecan gewährleistet dies.

### Beispiel 1:

Cyclododecan wird als Schmelze bei einer Temperatur von 80°C aufgesprüht.
· Cyclododecan wird im Wasserbad (oder einem heizbaren Gefäß mit Temperaturregler) auf ca 90°C erhitzt.
   Cyclododecan wird in den heizbaren Becher einer Sata Heizspritzpistole (oder einer heizbaren Airlessanlage der Fa. Wilhelm Wagner) eingefüllt und mit dieser bei einer Temperatur von ca 90°C mit Druckluft bei 2 bar auf die Schalung aufgespritzt.
   Der Abstand zwischen Düse und Objektoberfläche sollte ca 10cm betragen damit der Sprühnebel nicht zu sehr abkühlt.

### Beispiel 2:

Cyclododecan wird als wässerige Dispersion auf die Schalung aufgetragen. Die Dispersion kann mit dem Pinsel, dem Farbroller oder der Spritzpistole aufgetragen werden.

### 5. Anwendung im Bereich der Theater- oder Filmkulissen sowie in der Werbung

Wird heiße Cyclododecanschmelze versprüht, ohne auf ein Substrat aufgetragen zu werden, entsteht durch Abkühlung des Cyclododecan-Nebels ein flockiger, schneeartiger Niederschlag. Dieser Niederschlag kann mehrere Tage als dekorativer Schnee-Ersatz oder dergleichen dienen. Da dieser Niederschlag rückstandslos sublimiert, können aufwendige Reinigungsmaßnahmen entfallen.

Bei Aufsprühen einer heißen Cyclododecanschmelze auf eine Platte, Brett, Wand oder dergleichen Substrat entsteht durch Abkühlung ein weißer Cyclododecanfilm auf dem Substrat, so daß auf dunklen Untergründen weiße Markierungen oder Aufschriften aus Cyclododecan angebracht werden können, die nach einiger Zeit durch Verdunsten von selbst wieder verschwinden. Dadurch eröffnen sich für die Werbung besondere Möglichkeiten, indem Texte oder bildliche Darstellungen durch Aufsprühen heißer Cyclododecanschmelze auf dunklem Untergrund weiß hervortreten und je nach Schichtdicke des auf dem Untergrund verfestigen Cyclododecans für einige Tage sichtbar bleiben. Danach ist auf Aufschrift durch Sublimieren des Cyclododecans rückstandsfrei verschwunden.

Diese Möglichkeiten ergeben sich auch durch Aufsprühen einer heißen Mentholschmelze; jedoch ist die Verdunstungsrate des Menthols sehr viel höher als diejenige des Cyclododecans, so daß die Sichtbarkeit des aufgesprühten Menthols vor allem im Sonnenlicht schon nach kurzer Zeit nicht mehr gegeben ist.

### Beispiel 1:

Festes Cyclododecan wird im Wasserbad auf ca. 90°C erhitzt. Die erhaltene Cyclododecanschmelze wird in einen heizbaren Becher einer Sata-Heißspritzpistole eingefüllt und mit dieser bei einer Temperatur von ca. 90°C mit Druckluft von 2 bar auf ein Substrat aufgespritzt. Der Abstand zwischen der Düse der Heißspritzpistole und dem Substrat sollte ca. 10 cm betragen. Auf dem Substrat entsteht ein weißer Überzug, der zu Dekorationszwecken dienen kann. Der Überzug kann durch Verwenden geeigneter Düsen an der Spritzpistole auch eine Beschriftung oder eine bildliche Darstellung sein. Je nach Schichtdicke des Auftrages auf dem Substrat ist das feste Cyclododecan des Auftrags nach einigen Tagen rückstandsfrei abgedampft.

### Beispiel 2:

Festes Cyclododecan wird mit üblichen Netzmitteln und Dispergatoren mit Wasser zu einer wässrigen Dispersion verrührt. Hier kommen Netzmittel und Dispergatoren in Betracht, die auch bei der Herstellung von Wachsdispersionen in Wasser eingesetzt werden. Nach Herstellung der Dispersion kann die Deckkraft der weißen Farbe der Dispersion durch Zugabe festen Cyclododecans wie folgt erhöht werden:

Festes Cyclododecan wird zu Feinmehl mit einer Korngröße von bis zu 0,063 mm gemahlen und der Dispersion im Verhältnis 1:1 (in Raumteilen) zugesetzt.

Alternativ kann Cyclododecan zu Feinmehl mit einer Korngröße von bis zu 0,020 mm im erwähnten Heißspritzverfahren vernebelt und der Nebel der Dispersion im Verhältnis 1:1 (im Raumteilen) zugesetzt werden.

Der vermahlene oder vernebelte Cyclododecan-Anteil bleibt in der Dispersion als feste Teilchen erhalten und erhöht damit die Deckkraft der weißen Farbe, wenn diese beispielsweise mit Pinsel, dem Farbroller oder der Spritzpistole bei Zimmertemperatur auf ein Substrat aufgetragen wird.

Statt der Dispersion vermahlenes oder vernebeltes Cyclododecan zuzusetzen, kann der Dispersion auch ein Pigment oder ein anderer Farbstoff in entsprechend feiner Körnung beigegeben werden, so daß das in der Dispersion aufgelöste Cyclododecan als flüchtiges Bindemittel für die Haftung des beigegebenen Pigments oder Farbstoffs auf dem gewählten Untergrund dient.

### 6. Anwendung bei Färbeverfahren

Beim Färben von Textilien oder Leder etc. sowie im Batikverfahren können die genannten Schutzstoffe eingesetzt werden.

So können Textilien mit Cyclododecan oder Camphen partiell abgedeckt werden, so daß an diesen Stellen bei einer Färbung in wässrigen Medien kein Farbstoff angenommen wird. Dies kann z.B. zur künstlerischen Gestaltung oder zur Schaffung von dekorativen Elementen auf Textilien oder Tuchen dienen. Das bisher angewandte Verfahren durch Abdecken mit einem Wachs erfordert ein anschließendes Entfernen des Abdeckungsmittels mit einem Lösemittel oder durch Wärme. Dies ist neben der Belastung für die Umwelt auch eine Belastung für die Stoffe selbst.

Das Aufbringen des Cyclododecans etc. geschieht entweder als Schmelze, wie z.B. bei Baumwolle oder Leinen etc. oder in gelöster Form bei temperaturempfindlichen Stoffen wie z.B. Seide.

Mit dieser Methode sind aber auch partielle Fleckenentfernungen möglich, indem die Umgebung des Flekkens z.B. mit Cyclododecan abgedeckt wird und so geschützt wird. Der Fleck kan dann z.B. mit wässrigen Mitteln entfernt werden, ohne daß die Umgebung des Fleckens davon berührt wird.

## Patentansprüche

1. Verwendung eines Schutzstoffes mit verfestigender und/oder versiegelnder Wirkung zur zeitweiligen Versiegelung oder Verfestigung von Materialien, wobei metallische Materialien ausgeschlossen sind, **dadurch gekennzeichnet, daß**
der Schutzstoff ausgewählt ist aus einer Gruppe von Materialien, die bei Raumtemperatur oder wenig erhöhter Temperatur leicht flüchtig sind und aus Camphen, Campher, Cyclododecan, Naphthalin, Methylnaphthalin, Neopentylalkohol, Tricyclen, Menthol, Thymol oder Diphenyläther oder einer Mischung davon besteht.

2. Verwendung nach Anspruch 1, **dadurch gekennzeichnet, daß**
die Materialien nach Aufbringen des Schutzstoffes zur Verlängerung der Festigungswirkung vorübergehend luftdicht verpackt werden.

3. Verwendung nach Anspruch 1 oder 2, **dadurch gekennzeichnet, daß**
der Schutzstoff als warme Schmelze auf das Material aufgebracht wird.

4. Verwendung nach Anspruch 1 oder 2, **dadurch gekennzeichnet, daß**
der Schutzstoff vor dem Aufbringen auf das Material mit einem leicht flüchtigen Lösungsmittel verdünnt wird.

5. Verwendung nach Anspruch 4, **dadurch gekennzeichnet, daß**
ein Lösungsmittel ausgewählt wird, dessen Flüchtigkeit über derjenigen des Schutzstoffes liegt.

6. Verwendung nach Anspruch 1 oder 2, **dadurch gekennzeichnet, daß**
der Schutzstoff als wässrige Dispersion auf das Material aufgebracht wird.

7. Verwendung nach Anspruch 6, **dadurch gekennzeichnet, daß**
einer wässrigen Cyclododecan-Dispersion vermahlenes oder vernebeltes Cyclododecan oder ein feinstkörniges Pigment zugesetzt ist.

8. Verwendung nach einem der vorangehenden Ansprüche bei der Restaurierung und Konservierung von Kunstwerken verschiedener Art.

9. Verwendung nach einem der Ansprüche 1 bis 7 als Abdeckung im Baugewerbe.

10. Verwendung nach einem der Ansprüche 1 bis 7 als Schalungstrennmittel.

11. Verwendung nach einem der Ansprüche 1 bis 7 zum vorübergehenden Abdecken von Textilien beim Färben oder Reinigen von Textilien.

12. Verwendung nach einem der Ansprüche 1 bis 7 bei der Herstellung eines vorübergehend sichtbaren Anstrichs auf einem Substrat.

## Claims

1. Use of a protective substance having a consolidating and/or sealing action for the temporary sealing or consolidation of materials, excluding metallic materials, **characterised in that** the protective substance is selected from a group of materials which are readily volatile at room temperature or slightly elevated temperature and consists of camphene, camphor, cyclododecane, naphthalene, methylnaphthalene, neopentyl alcohol, tricyclene, menthol, thymol or diphenyl ether or a mixture thereof.

2. Use according to claim 1, **characterised in that** in order to extend the consolidating action the materials are temporarily packed to be airtight after the application of the protective substance.

3. Use according to claim 1 or 2, **characterised in that** the protective substance is applied in the form of a hot melt to the material.

4. Use according to claim 1 or 2, **characterised in that** before application to the material the protective substance is diluted with a readily volatile solvent.

5. Use according to claim 4, **characterised in that** a solvent is selected whose volatility is above that of the protective substance.

6. Use according to claim 1 or 2, **characterised in that** the protective substance is applied in the form of an aqueous dispersion to the material.

7. Use according to claim 6, **characterised in that** ground or atomised cyclododecane or an ultra-fine grain pigment is added to an aqueous cyclododecane dispersion.

8. Use according to any one of the preceding claims in the restoration and preservation of works of art of various kinds.

9. Use according to any one of claims 1 - 7 as a covering in the building industry.

10. Use according to any one of claims 1 - 7 as a formwork release agent.

11. Use according to any one of claims 1 - 7 for the temporary covering of textiles during the dyeing or cleaning of textiles .

12. Use according to any one of claims 1 - 7 in the production of a temporarily visible coating on a substrate.

## Revendications

1. Utilisation d'une substance protectrice à effet de consolidation ou de scellement, pour la consolidation ou le scellement temporaire de matériaux, à l'exception des matériaux métalliques, **caractérisée en ce que**
la substance protectrice est sélectionnée dans un groupe de matières qui sont volatiles à température ambiante ou à des températures légèrement plus élevées et elle est constituée de camphène, de camphre, de cyclododécane, de naphtalène, de méthylnaphtalène, d'alcool de néopentyle, de tricyclène, de menthol, de thymol ou d'éther diphénylique ou d'un mélange de ces produits.

2. Utilisation selon la revendication 1, **caractérisée en ce qu'**après l'application de la substance protectrice, les matériaux sont emballés temporairement sous emballage hermétique à l'air, pour prolonger l'effet solidifiant.

3. Utilisation selon la revendication 1 ou 2, **caractérisée en ce que** la substance protectrice est appliquée sur le matériau sous forme de masse fondue chaude.

4. Utilisation selon la revendication 1 ou 2, **caractérisée en ce que**, avant son application sur le matériau, la substance protectrice est diluée avec un diluant facilement volatile.

5. Utilisation selon la revendication 4, **caractérisée en ce qu'**un diluant de volatilité supérieure à celle de la substance protectrice est sélectionné.

6. Utilisation selon la revendication 1 ou 2, **caractérisée en ce que** la substance protectrice est appliquée sur le matériau sous forme de dispersion aqueuse.

7. Utilisation selon la revendication 6, **caractérisée en ce que** du cyclododécane moulu ou vaporisé ou un pigment à granulométrie extrêmement fine est rajouté à une dispersion aqueuse de cyclododécane.

8. Utilisation selon l'une quelconque des revendications précédentes, mise en oeuvre pour la restauration ou la conservation d'oeuvres d'art de différentes natures.

9. Utilisation selon l'une quelconque des revendications 1 à 7, mise en oeuvre pour le recouvrement dans l'industrie du bâtiment.

10. Utilisation selon l'une quelconque des revendications 1 à 7, mise en oeuvre en tant que produit de séparation des coffrages.

11. Utilisation selon l'une quelconque des revendications 1 à 7, mise en oeuvre pour le recouvrement temporaire des textiles, lors des opérations de teinture ou de nettoyage des textiles.

12. Utilisation selon l'une quelconque des revendications 1 à 7, mise en oeuvre pour la création d'une couche de peinture temporairement visible sur un support.
